# EUROPÄISCHE PATENTSCHRIFT

(11) **EP 1 574 829 B1**
(45) Veröffentlichungstag und Bekanntmachung des Hinweises auf die Patenterteilung: **25.04.2007**
(21) Anmeldenummer: 05105421.1
(22) Anmeldetag: 18.03.2002
(51) Int. Cl.: G01G 21/28, G01G 3/14, G01G 23/00

(54) **Montagevorrichtung für einen Kraftaufnehmer und Waage**
Assembly device for a force receiver and scale
Dispositif de montage pour un capteur de force et balance

(43) Veröffentlichungstag der Anmeldung: 14.09.2005
(62) Teilanmeldung aus: 02100271.2
(73) Patentinhaber: Mettler-Toledo AG, 8606 Greifensee (CH)
(72) Erfinder: Loher, Urs, 8967, Widen AG (CH); Tellenbach, Jean-Maurice, 8442, Hettlingen (CH)

(56) Entgegenhaltungen:
- DE-U- 29 622 189
- US-A- 5 756 943
- AL BRENDEL: "Overload protection in electronic weighing systems:Part 5" MEASUREMENT AND CONTROL, INSTITUTE OF MEASUREMENT AND CONTROL. LONDON, GB, Bd. 12, Nr. 11, November 1979 (1979-11), Seite 471, XP002138047 ISSN: 0020-2940

## Beschreibung

Die Erfindung betrifft eine Montagevorrichtung für einen Kraftaufnehmer sowie eine Waage mit einem mittels der Montagevorrichtung montierten Kraftaufnehmer nach dem Oberbegriff der Patentansprüche 1 bzw. 8.

Kraftmesszellen von Waagen sind oft mit einem Kraftaufnehmer versehen, der einerseits mit einem als Abstützung dienenden Waagengehäuse und andererseits mit einem Waagschalenträger verbunden ist, über den die Einleitung der zu messenden Kraft erfolgt. Kraftaufnehmer können auf unterschiedliche Art gestaltet sein. Verbreitet sind Bauweisen mit einem elastischen verformbaren Körper als Kernstück, oder solche mit einer Vorrichtung zur Kraftkompensation, meist mit einer über ein Hebelwerk wirkenden Gegenkraft, die von einem stromgeregelten Elektromagneten erzeugt wird.

US-A-5756943 [8] offenbart eine Lastzelle mit einem plattenförmigen Verformungskörper, auf dem ein Spannungssensor aufgebracht ist. Dieser Körper ist Teil eines Kraftaufnehmers. Er weist in der Mitte eine Ausnehmung auf und ist in drei Teile gegliedert (Kraftabstützungsteil, Kernteil, Krafteinleitungsteil). Der Körper ist zwischen zwei weiteren Vornchtungsteilen montiert, beispielsweise zwei U-förmigen Profilen mit Einschnitten. Die weiteren Vorrichtungsteile bilden die Parallelführung und sind Teil des Kraftaufnehmers.

So ist zum Beispiel in [1], DE 199 39 633 A1 ein Kraftaufnehmer, der in [2], EP 0 670 479 A1 als "counterforce" oder "force receiver" bezeichnet ist, beschrieben, der einen Verformungskörper aufweist, der ein gehäusefest montierbares Teil des Kraftaufnehmers mit dessen der Krafteinleitung bzw. der Lastaufnahme dienendem Teil verbindet. Zwischen dem Verformungskörper und den mit dem Waagengehäuse und dem Waagschalenträger zu verbindenden Anschlussteilen weist der Kraftaufnehmer normalerweise Einschnitte auf, die der mechanischen Entkopplung des Verformungskörpers dienen, an dem die durch Krafteinwirkungen bewirkten Verformungen mittels Sensoren, vorzugsweise Dehnmessstreifen, gemessen werden.

Der Verformungskörper ist vorzugsweise als Messparallelogramm mit parallelogrammartig geführten Schenkeln ausgebildet (siehe z.B. [3], EP 0 511 521 A1).

Das mittels der vorzugsweise in einer Brückenschaltung integrierten Dehnmessstreifen gebildete, analoge Messsignal wird normalerweise in einer Wandlerschaltung digitalisiert und anschliessend weiter verarbeitet. Der Aufbau einer Brückenschaltung mit Dehnmessstreifen ist beispielsweise in [4], U. Tietze, Ch. Schenk, Halbleiterschaltungstechnik, 11. Auflage, 1. Nachdruck, Springer Verlag, Berlin 1999, Seiten 1242-1243 beschrieben.

Zur Weiterverarbeitung der digitalisierten Messsignale weist die in [2] beschriebene Messzelle ein Speichermodul auf, in dem der Messzelle zugehörige Daten gespeichert sind, mittels derer die Messsignale korrigierbar sind.

Wie in [5], Offenlegungsschrift GB 1 462 808 beschrieben, sind dabei insbesondere Fehler zu korrigieren, die durch Nichtlinearitäten, Hystereseeffekte, Temperatureinflüsse und Kriechen verursacht werden. Die dazu notwendigen Kalibrierungs- und Kompensationsdaten werden bei der Herstellung im Werk durch eigens dafür vorgesehene Prüf- und Messverfahren gewonnen und im Speichermodul abgelegt.

In [1] ist beschrieben, dass die Messgenauigkeit von Kraftaufnehmern von Wägezellen wesentlich von deren Hystereseeigenschaften abhängt. Die Hysterese von Kraftaufnehmern kann dabei mehrere Ursachen haben, die meist in Verbindung miteinander auftreten.

Gemäss [1] betrafen bisherige, im mechanisch-konstruktiven Bereich angewendete Massnahmen zur Verminderung von Hystereseeffekten hauptsächlich die Vermeidung von plastischen Verformungen des Werkstoffes des Kraftaufnehmers. Zur Vermeidung von Reibung zwischen dem gehäusefest montierbaren Teil des Kraftaufnehmers und dem zugehörigen Befestigungsteil wurden diese mit möglichst plan aufeinander angeordneten und von Fett und weiteren Verunreinigungen befreiten Auflageflächen fest miteinander verschraubt. Zur Begrenzung des Hysteresefehlers der Waage mussten feste Vorgaben zur Bearbeitung der Auflageflächen und Anzugsmomente der Schrauben eingehalten werden.

Dabei wurde festgestellt, dass durch die Schraubverbindung unterschiedliche Materialspannungen auftraten, welche die Hysterese zusätzlich negativ beeinflusste.

In [1] wurde daher vorgeschlagen, zwischen dem gehäusefest montierbaren Teil des Kraftaufnehmers und dem zugehörigen Befestigungsteil ein Zwischenstück aus flachem, elastischem Dichtungswerkstoff vorzusehen. Bei dieser Lösung ist jedoch nebst den Materialkosten das Langzeitverhalten des Zwischenstücks zu berücksichtigen. Gegebenenfalls ist eine mit einem elastischen Zwischenstück versehene Waage nach einer verhältnismässig kurzen Betriebsdauer neu zu kalibrieren.

Moderne Waagen weisen zudem öfters modulare Kraftmesszellen auf, die von einem Servicetechniker anwenderseitig ausgetauscht werden, ohne dass die Waage ins Werk gesandt wird. Bei diesen Waagen ist die Verwendung eines elastischen Zwischenstücks, ohne jeweilige Neukalibrierung der Waage nach dem Austausch der Kraftmesszelle, kaum empfehlenswert, da sich das Verhalten des elastischen Zwischenstücks mit dem Austausch der Kraftmesszelle stark ändern kann.

Der vorliegenden Erfindung liegt daher die Aufgabe zugrunde, eine verbesserte Montagevorrichtung für einen Kraftaufnehmer sowie eine Waage mit einem mittels dieser Montagevorrichtung montierten Kraftaufnehmer zu schaffen. Unter Montagevorrichtung sind dabei die mechanischen Komponenten zu verstehen, welche in ihrer Gesamtheit die Einbindung des Kraftaufnehmers zwischen Lasteinleitung und (Gegen-)Kraftabstützung ermöglichen.

Insbesondere ist eine kostengünstige Montagevorrichtung zu schaffen, die es erlaubt einen mit Sensoren versehenen Kraftaufnehmer derart zu montieren, dass dessen Messverhalten weitgehend linear ist und daher nur geringe Messabweichungen zu kompensieren sind. Dabei sollen die nach der Montage des Kraftaufnehmers verbleibenden Nichtidealitäten sich im Laufe der Zeit möglichst nicht mehr verändern.

Ferner sollte eine Montagevorrichtung geschaffen werden, mittels der Kraftmesszellen mit geringem Raumbedarf in einem Waagengehäuse stabil montierbar sind.

Die Montagevorrichtung in einer vorzugsweisen Ausgestaltung soll die Kraftmesszellen ferner zuverlässig gegen Überlast schützen.

Die Montagevorrichtung soll zudem für die Montage modularer Kraftmesszellen geeignet sein, die austauschbar sein sollen, ohne dass eine Neukalibrierung der Waage notwendig wird.

Diese Aufgaben werden mit einer Montagevorrichtung und einer Waage gelöst, welche die in Anspruch 1, bzw. 8 angegebenen Merkmale aufweisen. Vorteilhafte Ausgestaltungen der Erfindung sind in weiteren Ansprüchen angegeben.

Ein Kraftaufnehmer mit einem Krafteinleitungsteil, einem Kraftabstützteil und einem dazwischen liegenden, gegebenenfalls mittels Einschnitten gegenüber dem Krafteinleitungsteil und/oder dem Kraftabstützungsteil mechanisch entkoppelten, mit mindestens einem Sensor versehenen Kernteil in üblicher Art, weist eine besondere Anordnung von Gewindebohrungen für die Aufnahme von Befestigungsschrauben zur Befestigung sowohl eines Lastaufnahmeteils am Krafteinleitungsteil als auch eines Befestigungsteils am Kraftabstützteil auf.

Die erfindungsgemässe Montagevorrichtung für einen Kraftaufnehmer, insbesondere der genannten Art, zeichnet sich aus durch ein Befestigungsteil, das einen gegen den Kraftaufnehmer offenen, U-förmigen Querschnitt aufweist und sich von der Befestigungsfläche des Kraftabstützteils gegen das Krafteinleitungsteil über die Mitte des Kernteils erstreckt und am Befestigungsteil Mittel zur Fixierung desselben vorhanden sind, zum Beispiel Schrauben, Klemmen, Schnappverschlüsse oder dergleichen. Damit lässt sich das Befestigungsteil und damit die Kraftmesszelle an meist feststehenden Teilen wie insbesondere für Waagen an deren Gehäuse anbringen. Bevorzugt weist das Befestigungsteil Mittel auf, welche es ermöglichen, es mit einem Kraftaufnehmer der oben genannten Art zu verschrauben. Weiter ist bevorzugt, dass das Lastaufnahmeteil, das insbesondere für Waagen auch als Waagschalenträger bezeichnet wird, ebenfalls auf die angegebene Weise verschraubbar gestaltet ist. Dieses Merkmal entfällt zum Beispiel, wenn bei Waagen die Lastaufnahme hängend über einen direkt in das Krafteinleitungsteil geschraubten Haken erfolgt.

In der Montagevorrichtung wird das Kraftabstützungsteil mit einem Befestigungsteil verbunden, das seinerseits in geeigneter Weise fixiert werden kann, zum Beispiel im Gehäuse einer Waage. Das Kraftabstützungsteil ist daher in den meisten Anwendungen des Kraftaufnehmers ein gehäusefest montierbares Teil des Kraftaufnehmers. Das Krafteinleitungsteil wird in der Montagevorrichtung mit einem Lastaufnahmeteil verbunden; in Waagen ist das Lastaufnahmeteil ein Waagschalenträger.

Befestigungsteil und Lastaufnahmeteil sollen ihrerseits möglichst steif sein und die Mittel aufweisen, um den mit der Montagevorrichtung versehenen Kraftaufnehmer zu platzieren, beispielsweise im Gehäuse einer Waage. Bevorzugt sind daher sowohl das Befestigungsteil als auch das Lastaufnahmeteil als U-profilförmige Träger mit seitlich hervorragenden Stegen geformt. Die Stege geben Steifigkeit und ermöglichen im Fall des Befestigungsteils die Verbindung zur Aussenwelt und eröffnen die Möglichkeit, bei gleichbleibend geringer Bauhöhe einen Überlastschutz vorzusehen. Die Träger schützen ausserdem den Kraftaufnehmer beim Handhaben des Moduls.

Beispielsweise aus [6], Offenlegungsschrift DE 199 10 003 A1 ist ferner bekannt, dass Kraftaufnehmer und Dehnmessstreifen hochempfindliche Bauteile sind, die durch mechanische Überlastung leicht zerstörbar sind. Die in [6] beschriebene Vorrichtung weist daher einen über dem gehäusefest montierten Teil des Kraftaufnehmers angeordneten, verstellbaren Anschlag auf, durch den die Auslenkung der vom Waagschalenträger gehaltenen Waagschale bzw. Wägeplattform nach unten begrenzt wird. Diese Ausgestaltung der Überlastsicherung, die einen relativ hohen Raumbedarf bedingt, ist mit modularen Kraftmesszellen, wie sie in [2] beschrieben sind, nicht vorteilhaft realisierbar. Durch das vorgesehene Zusammenspiel der Wägeplattform und der Überlastsicherung resultieren starke Einschränkungen der Gestaltungsmöglichkeiten der Waage. Gegebenenfalls ist nach dem Austausch der Messzelle der Abstand zwischen dem Anschlag und der Wägeplattform neu einzustellen. In der Vorrichtung von [6] liegen die vom Anschlag und der Last auf die Wägeplattform einwirkenden Kräfte zudem nicht auf einer Achse, so dass nach dem Erreichen des Anschlags eine durch den Anschlag nicht begrenzte Kraftkomponente weiter auf den Kraftaufnehmer einwirken und dessen elastische Eigenschaften nachteilig beeinflussen oder diesen bei extremer Krafteinwirkung mit ungünstigen Drehmomenten sogar schädigen kann.

Durch vorzugsweise Ausgestaltungen der erfindungsgemässen Montagevorrichtung sind diese Nachteile vermieden. Zur Vermeidung einer Überlastung des mit Sensoren versehenen Kraftaufnehmers erstrecken sich die Stege von Lastaufnahmeteil und Befestigungsteil so weit gegeneinander, dass sie überlappen. Im überlappenden Bereich sind aufeinander abgestimmte Anschläge angebracht, welche eine übermässige Auslenkung zwischen Krafteinleitungsteil und Kraftabstützteil des Kraftaufnehmers unter zu hoher Krafteinwirkung verhindern. Beispielsweise ist wenigstens ein Seitenteil des Waagschalenträgers - oder, allgemeiner, des Lastaufnahmeteils - mit einer Bohrung versehen, durch die ein mit dem Befestigungsteil verbundener Bolzen mit vorzugsweise zwei Schraubenmuttern geführt ist, die derart justierbar sind, dass die Auslenkung des der Krafteinleitung dienenden Teils des Kraftaufnehmers nach unten durch die erste Schraubenmutter und die Auslenkung des der Krafteinleitung dienenden Teils des Kraftaufnehmers nach oben durch die zweite Schraubenmutter begrenzt wird. Andere Ausgestaltungen der Anschläge an den überlappenden Stegen sind im Rahmen der Erfindung ohne weiteres möglich.

Durch die Einwirkung des Anschlags unmittelbar auf den Waagschalenträger kann die Überlastsicherung mit minimalem Raumbedarf realisiert werden. Da die Wägeplattform bzw. die Waagschale nicht direkt mit der Überlastsicherung zusammenwirkt, bestehen diesbezüglich keine Einschränkungen bei der Gestaltung der Waage.

Vorzugsweise sind das Befestigungsteil und das Lastaufnahmeteil beidseitig mit je einem Anschlag für beide Auslenkungsrichtungen versehen. Beispielsweise kann der Waagschalenträger beidseitig mit einem eine Bohrung aufweisenden Seitenteil versehen sein, durch das hindurch je ein mit dem Befestigungsteil verbundener, Bolzen mit zwei Schraubenmuttern geführt ist. Die Schraubenmuttern können daher derart justiert werden, dass die beiden Seitenteile jeweils gleichzeitig auf die einen Anschlag bildenden Schraubenmuttern auftreffen, wodurch eine seitliche Verdrehung des Kraftaufnehmers und entsprechende Hystereseprobleme vermieden werden können.

Durch die Ausrichtung der Achse der zu messenden, auf den Waagschalenträger einwirkenden Kräfte und die Achsen der Bolzen in einer Ebene, wird verhindert, dass nach dem beidseitigen Erreichen des Anschlags weiterhin eine lastabhängige Kraftkomponente auf den Kraftaufnehmer einwirkt, die dessen Verhalten negativ beeinflussen kann.

Der Waagschalenträger und das Befestigungsteil weisen vorzugsweise einen gegen den Kraftaufnehmer offenen U-förmigen Querschnitt auf, so dass der Kraftaufnehmer von diesen eine erhöhte Steifigkeit aufweisenden Teilen teilweise umfasst wird. Die Montagevorrichtung mit damit gehaltenen Messzellen kann daher auch in kleinen Waagen eingesetzt werden, an die hinsichtlich Präzision hohe Anforderungen gestellt werden.

Die Enden des vorzugsweise U-Profil-förmigen Befestigungsteils bilden nach aussen gebogenen Flügelteile, die mit Bohrungen zur Durchführung von Montageschrauben versehen sind, die mit im Waagengehäuse vorgesehen Stützelementen verbindbar, vorzugsweise verschraubbar sind. Das Befestigungsteil in dieser Ausgestaltung erlaubt daher einerseits das stabile Halten des Kraftaufnehmers, die Realisierung einer einfachen, aber wirkungsvollen Überlastsicherung sowie die Verbindung der gesamten Messvorrichtung mit dem Waagengehäuse. Bei bekannten Lösungen hingegen, siehe z.B. [7], Offenlegungsschrift DE 198 36 317 A1, wird zur Verbindung der Messzelle mit dem Waagengehäuse ein zusätzliches, beispielsweise aus Blech gestanztes Chassis verwendet, das mit einem entsprechenden Kostenaufwand hergestellt und in einem dementsprechend grösseren Waagengehäuse montiert wird.

Der Kraftaufnehmer wird daher vorzugsweise mit den beschriebenen Waagschalenträgern und Befestigungsteilen verbunden. Die Verwendung von anders ausgestalteten Waagschalenträgern und Befestigungsteilen ist jedoch auch möglich.

Nachfolgend wird die Erfindung anhand von Zeichnungen am Beispiel einer Kraftmesszelle mit einem als Messparallelogramm ausgeführten Verformungskörper mit Dehnmessstreifen als Sensoren näher erläutert. Dieses Beispiel ist aber nicht einschränkend zu verstehen. Die Erfindung lässt sich auch an anderen Typen von Kraftmesszellen einsetzen. Es zeigen:
- Figur 1: einen mittels einer Montagevorrichtung montierten Kraftaufnehmer 20, der zusammen mit Sensoren 28, 29 und einem Schaltungsmodul 24 eine modulare Kraftmesszelle 2 bildet, die mit einem der Krafteinleitung dienenden Waagschalenträger 4 verbunden und mittels eines Befestigungsteils 3 mit einem Waagengehäuse 5 verbindbar ist,
- Figur 2: eine Seitenansicht der modularen Kraftmesszelle 2 von Figur 1,
- Figur 3: den Kraftaufnehmer 20 der modularen Kraftmesszelle 2 von Figur 1 mit Schrauben 36_{BR}, 36_{BL}, 36_{F} ; 46_{BR}, 46_{BL}, 46_{F} ; 231 zur Befestigung des mit einem Waagengehäuse 5 verbindbaren Befestigungsteils 3, des Waagschalenträgers 4 und eines zum Halten des Schaltungsmoduls dienenden Metallelements,
- Figur 4: die modulare Kraftmesszelle 2 von Figur 1 mit dem der Krafteinleitung dienenden Teil 206 von vorn gesehen,
- Figur 5: die modulare Kraftmesszelle 2 von Figur 1 von oben gesehen, mit zwei Anschlussleitungen 22_{T}, 22_{B}, mittels derer das Schaltungsmodul 24 mit den Sensoren verbunden ist, und
- Figur 6: den modularen Aufbau eines bevorzugten Schaltungsmoduls 24, das mittels der Anschlussleitungen 22_{T}, 22_{T}', 22_{B} mit den Sensoren 28_{TF}, 28_{TB}, 28_{BF}, 28_{BB}, 29 sowie über eine weitere Anschlussleitung 500 mit einem Prozessormodul 501 verbunden ist.

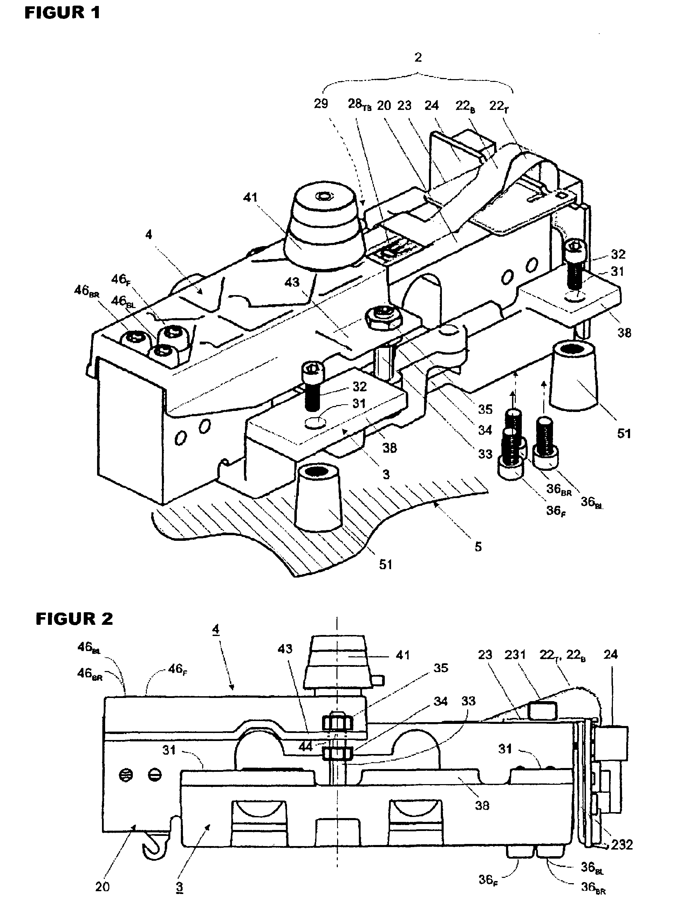

Figur 1 und Figur 2 zeigen einen mittels einer erfindungsgemässen Montagevorrichtung montierten Kraftaufnehmer 20, der zusammen mit Sensoren 28, 29 und einem Schaltungsmodul 24 eine modulare Kraftmesszelle 2 bildet. Der Kraftaufnehmer 20 ist mittels Montageschrauben 36_{BR}, 36_{BL}, 36_{F}; 46_{BR}, 46_{BL}, 46_{F} mit einem Befestigungsteil 3 und einem Waagschalenträger 4 verbunden. Das mittels zwei getrennt voneinander geführter flexiblen bandartigen Verbindungen 22_{T}, 22_{B} mit den Sensoren 28, 29 verbundene Schaltungsmodul 24 ist von einem mittels einer Schraube 231 mit dem Kraftaufnehmer 20 verbundenen winkelförmigen Metallelement 23 derart gehalten, dass ein guter Wärmeaustausch zwischen dem Schaltungsmodul 24 und dem Kraftaufnehmer 20 resultiert.

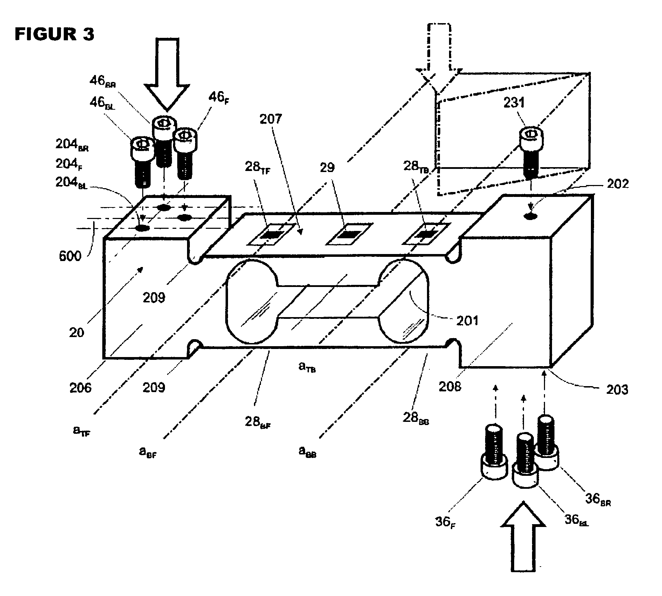

Einleitend wurde beschrieben, dass Kraftaufnehmer 20 und Dehnmessstreifen 28_{TF}, 28_{TB}, 28_{BF}, 28_{BB} (siehe Figur 3) hochempfindliche Bauteile sind, die durch mechanische Überlastung leicht zerstörbar sind. Durch eine vorzugsweise Ausgestaltung der erfindungsgemässen Montagevorrichtung ist eine Überlastsicherung in einfacher Weise realisierbar, durch die die Auslenkung des Kraftaufnehmers 20 nach unten und/oder nach oben beschränkt werden kann, ohne dass störende Momente auf diesen einwirken.

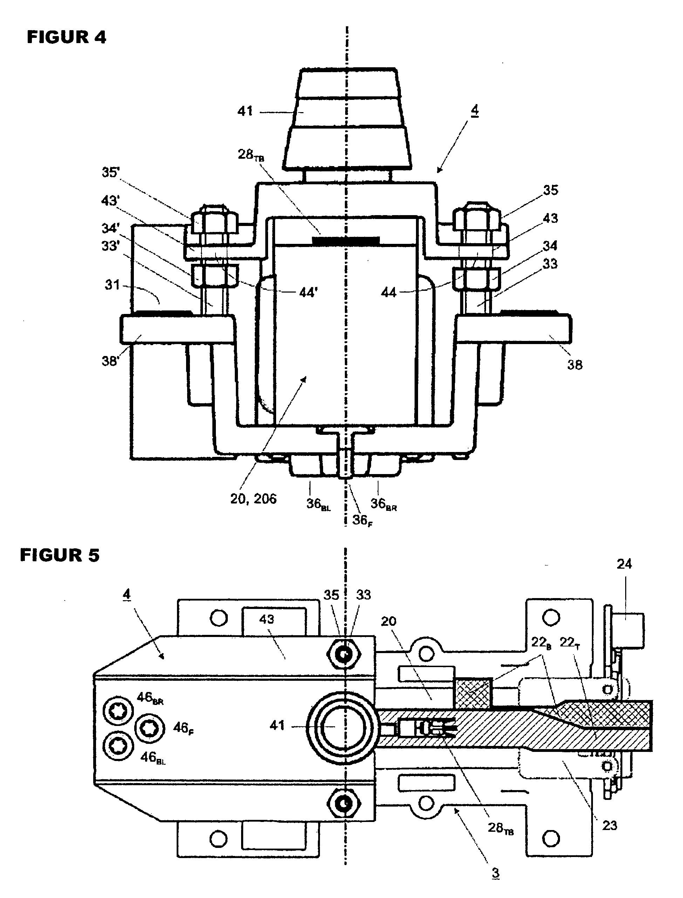

Dazu weist der U-Profil-förmige Waagschalenträger 4, wie in Figur 4 gezeigt, Seitenteile 43, 43' mit je einer Bohrung 44, 44' auf, durch die ein mit dem Befestigungsteil 3 verbundener Bolzen 33, 33' geführt ist. Die Bolzen 33, 33' tragen zwei Schraubenmuttern 34, 35; 34', 35', die derart justierbar sind, dass die Auslenkung des der Krafteinleitung dienenden Teils 208 des Kraftaufnehmers 20 bzw. der Seitenteile 43, 43' nach unten durch die erste Schraubenmutter 34; 34' und die Auslenkung der Seitenteile 43, 43' nach oben durch die zweite Schraubenmutter 35; 35' begrenzt wird.

Aus Figur 4 ist ersichtlich, dass die Überlastsicherung, aufgrund der Einwirkung der durch die Schraubenmuttern 34, 35; 34', 35' gebildeten unteren und oberen Endanschläge unmittelbar auf den Waagschalenträger 4, mit minimalem Raumbedarf realisiert werden kann. Dies ist besonders bei modularen Kraftmesszellen 2 von Vorteil, da diese vorzugsweise eine sehr kompakte Bauform aufweisen sollen.

Durch die Ausrichtung der Achse der zu messenden, auf den Waagschalenträger 4 bzw. auf einen darauf vorgesehenen Waagschalenaufnahmekonus 41 einwirkenden Kräfte und die Achsen der Bolzen 33, 33' in einer Ebene, wird verhindert, dass nach dem beidseitigen Erreichen des Anschlags weiterhin eine lastabhängige Kraftkomponente auf den Kraftaufnehmer 20 einwirkt, die dessen Verhalten negativ beeinflussen kann. Weiter erhöhte Lasteinwirkungen werden daher vollumfänglich von der Überlastsicherung abgefangen.

Das Befestigungsteil 3 und der Waagschalenträger 4 weisen vorzugsweise einen gegen den Kraftaufnehmer 20 offenen U-förmigen Querschnitt auf, so dass der Kraftaufnehmer 20 von diesen eine erhöhte Steifigkeit aufweisenden Teilen 3, 4 teilweise umfasst wird. Die Montagevorrichtung mit damit gehaltenen Messzellen, einschliesslich der gegebenenfalls vorgesehenen Überlastsicherung, kann daher auch in kleinen Waagen eingesetzt werden, an die hinsichtlich Präzision hohe Anforderungen gestellt werden.

Wie in Figur 1 gezeigt, bilden die Enden des U-Profil-förmigen Befestigungsteils nach aussen gebogenen Flügelteile 38, 38', die mit Bohrungen 31 zur Durchführung von Montageschrauben 32 versehen sind, welche mit im Waagengehäuse 5 vorgesehen Stützelementen 51 verschraubbar sind. Ausser Schrauben können auch andere Befestigungsmittel wie Klemmen, Schnappmechanismen und ähnliches zur Anwendung gelangen. Die Stützelemente 51 sind vorzugsweise aus einem isolierenden Material gefertigt, so dass die Messzelle 2 vom Waagengehäuse 5 und weiteren darin vorgesehenen Modulen, beispielsweise vom Prozessormodul 501, thermisch entkoppelt ist.

Das Befestigungsteil 3 in dieser Ausgestaltung erlaubt daher einerseits das stabile Halten des Kraftaufnehmers 20, die Realisierung einer einfachen, aber wirkungsvollen Überlastsicherung sowie die Verbindung der gesamten Montagevorrichtung und Kraftmesszelle mit einem Waagengehäuse 5, das gegebenenfalls nur ein geringes Volumen aufweist. Zudem wird eine gute thermische Entkopplung der Kraftmesszelle erzielt.

Figur 5 zeigt die modulare Kraftmesszelle 2 von Figur 1 von oben gesehen, mit den beiden Anschlussleitungen 22_{T}, 22_{B}, mittels derer das Schaltungsmodul 24 mit den Sensoren 28_{TF}, 28_{TB}, 28_{BF}, 28_{BB}, 29 verbunden ist. Gut ersichtlich ist ferner die Anordnung der Montageschrauben 46_{BR}, 46_{BL}, 46_{F} sowie die Anordnung der Achsen der Bolzen 33, 33' und des Waagschalenaufnahmekonus 41 in einer Ebene.

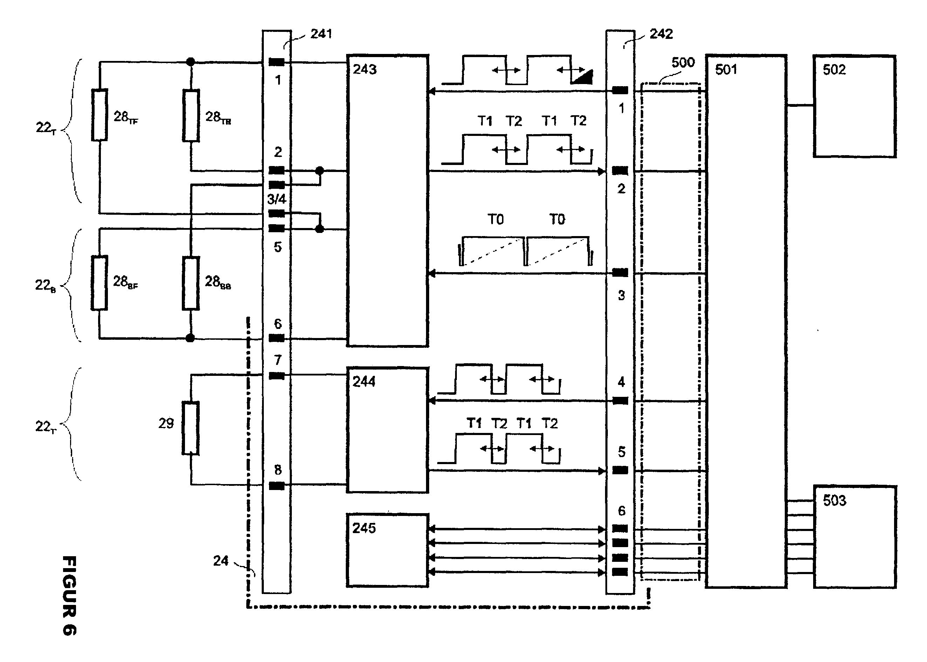

Figur 6 zeigt in einer vorzugsweisen Ausgestaltung den modularen Aufbau eines Schaltungsmoduls 24, das über Anschlussleisten 241, 242 und Anschlussleitungen 22_{T}, 22_{T}', 22_{B} bzw. 500 einerseits mit den Dehnmessstreifen 28_{TF}, 28_{TB}, 28_{BF}, 28_{BB} sowie einem Temperaturfühler 29 und andererseits mit einem Prozessormodul 501 verbunden ist, an das eine Anzeige 502 und ein Schnittstellenmodul 503 angeschlossen sind. Das Prozessormodul 501 ist innerhalb der Waage getrennt vom Schaltungsmodul 24 angeordnet und von diesem daher thermisch entkoppelt. Die vom Prozessormodul 501 erzeugte Verlustwärme bleibt daher ohne Einfluss auf die erfindungsgemässe modulare Kraftmesszelle 2.

Das Schaltungsmodul 24 weist zwei Wandlerschaltungen 243, 244 auf. Mittels der ersten Wandlerschaltung 243 werden die von den Dehnmessstreifen 28_{TF}, 28_{TB}, 28_{BF}, 28_{BB} abgegebenen analogen Signale und mittels der zweiten Wandlerschaltung 244 werden die vom Temperaturfühler 29 abgegebenen analogen Signale in zweiwertige pulsweitenmodulierte Signale pwm1, pwm2 gewandelt, über die Verbindungsleitung 500 zum Prozessormodul 501 übertragen und von diesem mittels Kompensationsdaten weiter verarbeitet, die aus einem vorzugsweise ebenfalls auf dem Schaltungsmodul 24 angeordneten Speichermodul 245 abrufbar sind.

Selbstverständlich kann die erfindungsgemässe Montagevorrichtung unabhängig von der jeweiligen Ausgestaltung der Messelektronik und der weiteren Ausgestaltung der Messzelle eingesetzt werden. Insbesondere kann die Montagevorrichtung auch zur Montage nicht modular aufgebauter Messzellen und von Kraftaufnehmern mit andersartigen Sensoren verwendet werden, um eine gute mechanische Entkopplung zu erzielen.

### Literaturverzeichnis:

[1] Offenlegungsschrift DE 199 39 633 A1
[2] Offenlegungsschrift EP 0 670 479 A1
[3] Offenlegungsschrift EP 0 511 521 A1
[4] U. Tietze, Ch. Schenk, Halbleiterschaltungstechnik, 11. Auflage, 1. Nachdruck, Springer Verlag, Berlin 1999
[5] Offenlegungsschrift GB 1 462 808
[6] Offenlegungsschrift DE 199 10 003 A1
[7] Offenlegungsschrift DE 198 36 317 A1
[8] US-A-5 756 943

## Patentansprüche

1. Montagevorrichtung für einen Kraftaufnehmer (20), der ein Krafteinleitungsteil (206), ein Kraftabstützungsteil (208) und ein dazwischen liegendes, mit mindestens einem Sensor (28, 29) versehenes Kernteil aufweist, mit einem über eine erste Befestigungsfläche mit dem Krafteinleitungsteil (206) verbundenen Lastaufnahmeteil (4) und einem über eine zweite Befestigungsfläche mit dem Kraftabstützungsteil (208) verbundenen Befestigungsteil (3), **dadurch gekennzeichnet, dass** das Befestigungsteil (3) in einer zur Längsrichtung orthogonalen Ebene einen gegen den Kraftaufnehmer (20) offenen, diesen zumindest teilweise umfassenden, U-förmigen Querschnitt aufweist, steif ausgebildet ist und sich von der zweiten Befestigungsfläche gegen das Krafteinleitungsteil (206) über die Mitte des Kernteils hinaus erstreckt, und dass am Befestigungsteil (3) Mittel (31; 32, 51) zur Fixierung desselben vorhanden sind.

2. Montagevorrichtung nach Anspruch 1, **dadurch gekennzeichnet, dass** die Mittel (31; 32, 51) zur Fixierung äusserst geringe Wärmeleitfähigkeit haben.

3. Montagevorrichtung nach Anspruch 1 oder 2, **dadurch gekennzeichnet, dass** das Befestigungsteil (3) Flügelteile (38) in Form seitlich längs verlaufender Stege aufweist, an denen die Mittel (31; 32, 51) zur Fixierung des Befestigungsteils (3) ansetzen.

4. Montagevorrichtung nach einem der Ansprüche 1 bis 3, **dadurch gekennzeichnet, dass** das Lastaufnahmeteil (4) einen gegen den Kraftaufnehmer (20) offenen, U-förmigen Querschnitt aufweist, sich von der ersten Befestigungsfläche des Kraftaufnehmers (20) gegen das Kraftabstützungsteil (208) bis in den Bereich des Befestigungsteils (3) erstreckt und mindestens eine einen Endanschlag für eine Relativbewegung zwischen Lastaufnahmeteil (4) und Befestigungsteil (3) bildende, mit dem Befestigungsteil (3) zusammen wirkende Vorrichtung (33, 34, 35; 33', 34', 35') enthält.

5. Montagevorrichtung nach Anspruch 4, **dadurch gekennzeichnet, dass** das Lastaufnahmeteil (4) Seitenteile (43, 43') in Form seitlich längs verlaufender Stege aufweist, wovon mindestens eines mit einer Bohrung (44, 44') versehen ist, durch die ein mit dem Befestigungsteil (3) verbundener Bolzen (33, 33') geführt ist, der mit einer ersten und/oder einer zweiten Schraubenmutter (34, 34', 35, 35') versehen ist, die derart justierbar ist, dass die Auslenkung des Krafteinleitungsteils (206) des Kraftaufnehmers (20) nach unten durch die erste Schraubenmutter (34, 34') und/oder nach oben durch die zweite Schraubenmutter (35, 35')begrenzt wird.

6. Montagevorrichtung nach Anspruch 5, **dadurch gekennzeichnet, dass** das Lastaufnahmeteil (4) beidseitig, vorzugsweise in gleichem Abstand, mit einem eine Bohrung (44, 44') aufweisenden Seitenteil (43, 43') versehen ist, durch das hindurch je ein mit dem Befestigungsteil (3) verbundener Bolzen (33, 33') mit zwei Schraubenmuttern (34, 35, 34', 35') geführt ist, die derart justierbar sind, dass die beiden Seitenteile (43, 43') jeweils gleichzeitig auf die einen Anschlag bildenden Schraubenmuttern (34, 35, 34', 35') auftreffen.

7. Montagevorrichtung nach Anspruch 5 oder 6, **dadurch gekennzeichnet, dass** die Achse der zu messenden, auf das Lastaufnahmeteil (4) einwirkenden Kräfte und die Achsen der Bolzen (33, 33') in einer vorzugsweise orthogonal zur Längsrichtung des Kraftaufnehmers (20) gerichteten Ebene verlaufen.

8. Waage **gekennzeichnet durch** eine Montagevorrichtung nach einem der Ansprüche 1 bis 7.

## Claims

1. Mounting arrangement for a force transducer (20), wherein the latter comprises a force-application part (206), a support part (208) and a core part lying between the force-application part and the support part and carrying at least one sensor (28; 29), with a load-receiving part (4) connected to the force-application part (206) through a first attachment surface, and with a fastening part (3) connected to the support part (208) through a second attachment surface, **characterized in that** the fastening part (3), in a plane orthogonal to the longitudinal direction, has a U-shaped cross-section with the open side of the U-profile facing towards the force transducer (20) and at least partly encompasses the force transducer (20), that the fastening part (3) is rigidly constructed and extends from the second attachment surface of the force transducer (20) towards the force-application part (206) over and beyond the middle of the core part, and further **characterized in that** means (31; 32, 51) are provided on the fastening part (3) for the fixation of the latter.

2. Mounting arrangement according to claim 1, **characterized in that** the means (31; 32, 51) have an extremely low thermal conductivity.

3. Mounting arrangement according to claim 1 or 2, **characterized in that** the fastening part (3) has wing portions (38) configured as lengthwise lateral ledges that are gripped by the means (31; 32, 51) for the fixation of the fastening part (3).

4. Mounting arrangement according to one of the claims 1 to 3, **characterized in that** the load-receiving part (4) has a U-shaped cross-section with the open side of the U-profile facing towards the force transducer (20), that the load-receiving part (4) extends from the first attachment surface of the force transducer (20) towards the support part (208) into the area of the fastening part (3), and further **characterized in that** the load-receiving part (4) contains at least one device (33, 34, 35; 33', 34', 35') that cooperates with the fastening part (3) to form an end stop for a displacement travel of the load-receiving part (4) relative to the fastening part (3).

5. Mounting arrangement according to claim 4, **characterized in that** the load-receiving part (4) has lateral parts (43, 43') configured as lengthwise lateral ledges, wherein at least one of the lateral parts has a hole (44, 44') through which a bolt (33, 33') that is connected to the fastening part (3) passes with clearance, and wherein the bolt (33, 33') is provided with a first and/or second threaded nut (34, 34', 35, 35') that is adjustable in such a manner that the displacement travel of the force-application part (206) of the force transducer (20) is limited in the downward direction by the first nut (34, 34') and/or in the upward direction by the second nut (35, 35').

6. Mounting arrangement according to claim 5, **characterized in that** the load-receiving part (4) has lateral parts (43, 43') on each side, preferably at the same distance, each with a hole (44, 44') through which a bolt (33, 33') that is connected to the fastening part (3) passes with clearance, and wherein each of the bolts (33, 33') is provided with two threaded nuts (34, 34', 35, 35') that are adjustable in such a manner that the two lateral parts (43, 43') are in the downward direction stopped simultaneously by one nut (34, 34') on each side and in the upward direction simultaneously by the other nut (35, 35') on each side.

7. Mounting arrangement according to claim 5 or 6, **characterized in that** the line of action of the forces acting on the load-application part (4) and the axes of the bolts (33, 33') run in a plane that is preferably orthogonal to the longitudinal direction of the force transducer (20).

8. Scale with a mounting arrangement according to one of the claims 1 to 7.

## Revendications

1. Dispositif de montage pour un capteur de force (20), qui présente une partie d'application de force (206), une partie de soutien de force (208) et une partie centrale entre la partie de soutien de force et la partie d'application de force et laquelle est dotée d'au moins un capteur (28, 29), avec une partie de réception de charge (4) reliée par la première surface de fixation à la partie d'application de force (206) et d'une partie de fixation (3) reliée par la seconde surface de fixation à la partie de soutien de force (208), **caractérisé en ce que** la partie de fixation (3) présente dans un plan orthogonal à la direction longitudinale une section en forme de U, ouverte vers le capteur de force (20) et comprenant celui-ci au moins partiellement, est conçue rigide et s'étend depuis la seconde surface de fixation vers la partie d'application de force (206) au-delà du centre de la partie centrale, et **en ce que** des moyens (31 ; 32, 51) pour la fixation de la partie de fixation (3) sont présents sur celle-ci.

2. Dispositif de montage selon la revendication 1, **caractérisé en ce que** les moyens (31 ; 32, 51) pour la fixation présentent une conductivité thermique extrêmement faible.

3. Dispositif de montage selon la revendication 1 ou 2, **caractérisé en ce que** la partie de fixation (3) présente des parties d'ailette (38) sous la forme de traverses agencées sur le côté et dans la longueur, sur lesquelles les moyens (31 ; 32, 51) se placent pour la fixation de la partie de fixation (3).

4. Dispositif de montage selon l'une quelconque des revendications 1 à 3, **caractérisé en ce que** la partie de réception de charge (4) présente une section en forme de U et ouverte vers le capteur de force (20), s'étend depuis la première surface de fixation du capteur de force (20) vers la partie de soutien de force (208) jusque dans la zone de la partie de fixation (3) et contient au moins un dispositif (33, 34, 35 ; 33', 34', 35') agissant conjointement avec la partie de fixation (3) et formant une butée finale pour un déplacement relatif entre la partie de réception de charge (4) et la partie de fixation (3).

5. Dispositif de montage selon la revendication 4, **caractérisé en ce que** la partie de réception de charge (4) présente des parties latérales (43, 43') sous la forme de traverses agencées sur le côté et dans la longueur, dont au moins une est dotée d'un alésage (44, 44'), par laquelle un boulon (33, 33') relié à la partie de fixation (3) est guidé, lequel est doté d'un premier et/ou d'un second écrou (34, 34', 35, 35'), lequel écrou peut être réglé de telle sorte que la déviation de la partie d'application de force (206) du capteur de force (20) est limitée vers le bas par le premier écrou (34, 34') et/ou vers le haut par le second écrou (35, 35').

6. Dispositif de montage selon la revendication 5, **caractérisé en ce que** la partie de réception de charge (4) est dotée des deux côtés, de préférence à égale distance, d'une partie latérale (43, 43') présentant un alésage (44, 44'), à travers laquelle est guidé un boulon (33, 33') relié à la partie de fixation (3) avec deux écrous (34, 35, 34', 35'), qui peuvent être ajustés de telle sorte que les deux parties latérales (43, 43') arrivent respectivement en même temps sur les écrous (34, 35, 34', 35') formant une butée.

7. Dispositif de montage selon la revendication 5 ou 6, **caractérisé en ce que** l'axe des forces à mesurer et agissant sur la partie de réception de charge (4) et les axes des boulons (33, 33') sont agencés dans un plan orienté de préférence perpendiculairement à la direction longitudinale du capteur de force (20).

8. Balance **caractérisée par** un dispositif de montage selon l'une quelconque des revendications 1 à 7.
